# FASCICULE DE BREVET EUROPEEN

(11) **EP 0 589 759 B1**
(45) Date de publication et mention de la délivrance du brevet: **10.04.1996**
(21) Numéro de dépôt: 93402272.4
(22) Date de dépôt: 17.09.1993
(51) Int. Cl.: B60N 2/04

(54) **Glissière à mémoire interne pour un siège**
Führungsschiene mit internem Speicher zur Positionierung eines Sitzes
Internal memory slide for positioning a seat

(30) Priorité: 22.09.1992 FR 9211253
(43) Date de publication de la demande: 30.03.1994
(73) Titulaire: BERTRAND FAURE AUTOMOBILE "B.F.A.", F-91300 Massy (FR)
(72) Inventeur: Baloche, François, F-61100 Flers (FR)
(74) Mandataire: Madeuf, René Louis

(56) Documents cités:
- EP-A- 0 411 850
- FR-A- 2 378 649
- FR-A- 2 430 330
- FR-A- 2 656 262
- GB-A- 754 290
- GB-A- 2 234 431
- US-A- 4 648 657
- US-A- 4 671 571
- US-A- 4 881 774
- PATENT ABSTRACTS OF JAPAN, vol. 6, no, 236 (M-173)(1114), 25 novembre 1982; & JP-A-57 134 341 (OOI SEISAKUSHO) 19-08-1982
- PATENT ABSTRACTS OF JAPAN, vol. 7, no. 98 (M-210)(1243), 26 avril 1983; & JP-A-58 20 529 (ICHIKO KOGYO) 07-02-1983
- PATENT ABSTRACTS OF JAPAN, vol. 7, no. 104 (M-212)(1249), 6 mai 1983; & JP-A-58 26 644 (ICHIKO KOGYO) 17-02-1983

## Description

On connaît déjà depuis longtemps des glissières pour le réglage longitudinal des sièges de véhicule afin de placer chaque siège dans la position la plus confortable pour le passager.

Il existe ainsi des glissières à commande électrique dont les circuits peuvent comporter des mémoires permettant le réglage semi-automatique ou automatique de la position du siège suivant le passager considéré. Il s'agit là d'un perfectionnement important destine aux véhicules de haut de gamme qui peuvent être conduits par plusieurs personnes ayant des morphologies différentes, telles que dans un couple, afin que le siège, en particulier celui du conducteur, puisse reprendre la place désirée lorsque le véhicule est conduit soit par le mari, soit par l'épouse.

De tels dispositifs à commande électrique sont onéreux et on a donc cherché à réaliser des glissières comportant une mémoire mécanique beaucoup plus simple. C'est par exemple le cas du dispositif selon FR-A-2 623 451 mais là encore la constitution de cet ensemble est trop onéreuse lorsqu'il s'agit de véhicules de bas de gamme comportant seulement deux portes et où il est nécessaire, pour permettre l'entrée et la sortie des passagers dans la partie arrière du véhicule, d'avoir des glissières à mémoire mais pouvant également coulisser en avant vers le volant et le tableau de bord du véhicule de manière simple et rapide pour justement permettre l'entrée et la sortie des passagers assis sur les sièges ou la banquette arrière du véhicule à deux portes considéré.

On connaît par US-A-4 881 774 une glissière à mémoire garantissant la fonction de retour du siège dans la position établie avant le rabattement du dossier mais cette mémoire est externe à la glissière et réalisée par un rail supplémentaire.

On connaît également par GB-A-2 234 431 une mémoire, mais cette dernière est à retour fixe, la glissière mobile se positionnant alors selon une position fixe sensiblement médiane. Cette mémoire est réalisée par l'extrémité d'un levier qui vient en butée sur l'extrémité avant du rail fixe.

La présente invention a alors pour objet des glissières à mémoire comportant chacune une mémoire mécanique simple coopérant avec le profilé fixe de chaque glissière afin d'obtenir un ensemble permettant de régler un siège en position longitudinale, que ce soit le siège du conducteur ou celui du passager avant, et assurant en même temps la possibilité d'une manoeuvre simple laissant en place la mémoire mais permettant le déblocage pratiquement instantané du profilé supérieur mobile de chaque glissière afin de pouvoir avancer le siège considéré sous le volant ou près du tableau de bord après avoir rabattu le dossier sur l'assise pour permettre aux passagers arrière d'un véhicule à deux portes soit l'entrée, soit la sortie de celui-ci.

De plus, la mémoire mécanique, décrite dans la présente demande de brevet, est placée du côté interne de chaque glissière en réduisant ainsi considérablement l'encombrement du plancher du véhicule car, ainsi, on peut utiliser les espaces libres pour d'autres fonctions (attache de ceinture de sécurité, emplacement pour récepteur radio, téléphone et autres).

Conformément à l'invention, la glissière à mémoire interne comprenant un verrou articulé sur le profilé. supérieur mobile qui présente un peigne destiné à coopérer avec une denture du profilé inférieur fixe en vue de son verrouillage et une mémoire coopérant avec le profilé inférieur fixe de la glissière pour régler en position longitudinale un siège monté sur le profilé supérieur mobile et permettant un déblocage du profilé supérieur mobile afin d'assurer un mouvement de celui-ci par rapport au profilé inférieur fixe, est caractérisée en ce que la mémoire comprend un bras présentant un bec arrière et une encoche avant et étant en repos dans la partie basse interne du profilé inférieur fixe qui présente une denture interne destinée à coopérer avec ledit bec arrière de la mémoire un premier levier en L, terminé par un bec , étant articulé par l'intermédiaire d'un premier axe d'articulation sur une équerre montée sur le profilé supérieur mobile, et présentant un doigt en dessous de son axe d'articulation, cette équerre portant un second axe d'articulation pour, d'une part une biellette et, d'autre part un second levier en L qui est terminé par un bec destiné à coopérer avec l'encoche de la mémoire, la biellette étant prévue pour prendre appui sur le verrou sous l'effet du doigt du premier levier en L, un premier moyen de commande faisant pivoter la biellette et le second levier en L afin de permettre une libération respectivement du verrou et de la mémoire et un second moyen de commande faisant pivoter la biellette afin de permettre la libération du verrou.

Suivant une autre caractéristique de l'invention, le verrou comprend un ressort permettant après relâche de la commande, de faciliter le verrouillage du profilé supérieur mobile par rapport au profilé inférieur fixe, le second levier en L étant alors soulevé et la biellette en position de repos.

Selon encore une autre caractéristique de l'invention, la mémoire est placée en partie à l'intérieur de la glissière et en partie sur la face interne de cette dernière.

Diverses autres caractéristiques de l'invention ressortent d'ailleurs de la description détaillée qui suit.

Des formes de réalisation de l'objet de l'invention sont représentées, à titre d'exemples non limitatifs, au dessin annexé.
La fig. 1 est une élévation latérale montrant des organes d'une glissière conforme à l'invention dans la position qu'ils occupent lorsqu'on fait avancer l'un des sièges avant d'une automobile sous le volant ou sous le tableau de bord pour dégager le passage vers les sièges arrière.
La fig. 2 est une élévation latérale correspondant à la fig. 1 montrant les organes dans la position qu'ils occupent lorsque le profilé supérieur de la glissière est libre et que la mémoire est dégagée afin de régler la position d'un siège pour que celui-ci occupe l'emplacement de confort pour le passager considéré.
La fig. 3 est une élévation correspondant aux figures précédentes montrant la position des organes lorsqu'ils se verrouillent et qu'ainsi le siège est dans la position qu'il occupe lors du transport du passager ou du conducteur.

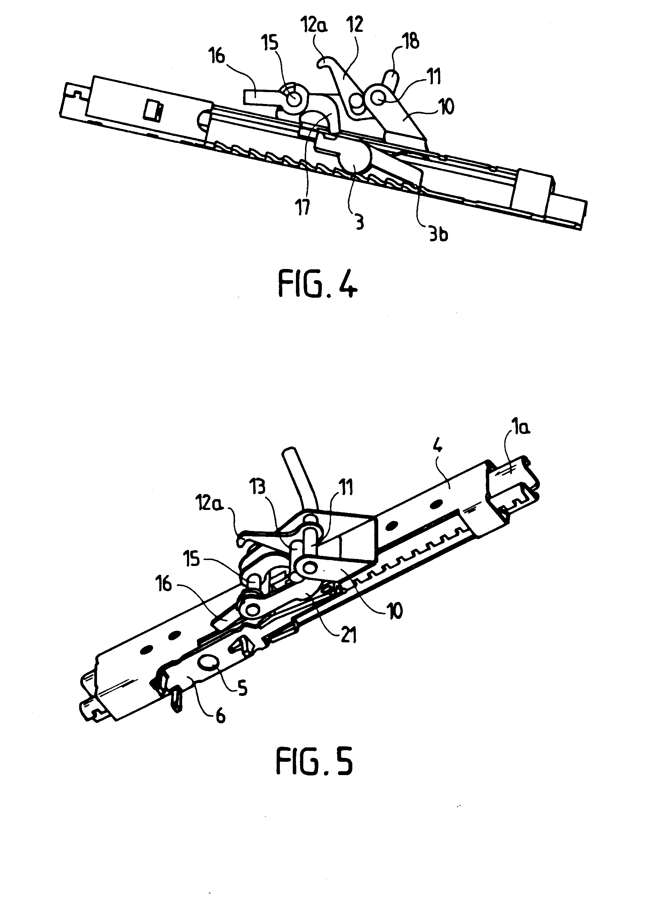

La fig. 4 est une élévation latérale, à plus petite échelle de la glissière à mémoire.
La fig. 5 est une vue en perspective de trois quart, correspondant à la fig. 4.

Les dessins ne montrent qu'une seule glissière et les organes se rapportant à celle-ci, étant entendu que dans la quasi totalité des cas chaque siège comporte deux glissières longitudinales placées sous le siège à droite et à gauche et que les organes commandant le verrouillage des profilés supérieurs à la ou aux mémoires sont coordonnés par des axes les reliant les uns aux autres. La description qui suit ne se réfèrera donc qu'à une seule glissière et ses organes pour faciliter la compréhension de l'invention, l'autre glissière et ses organes de verrouillage de la mémoire étant identiques.

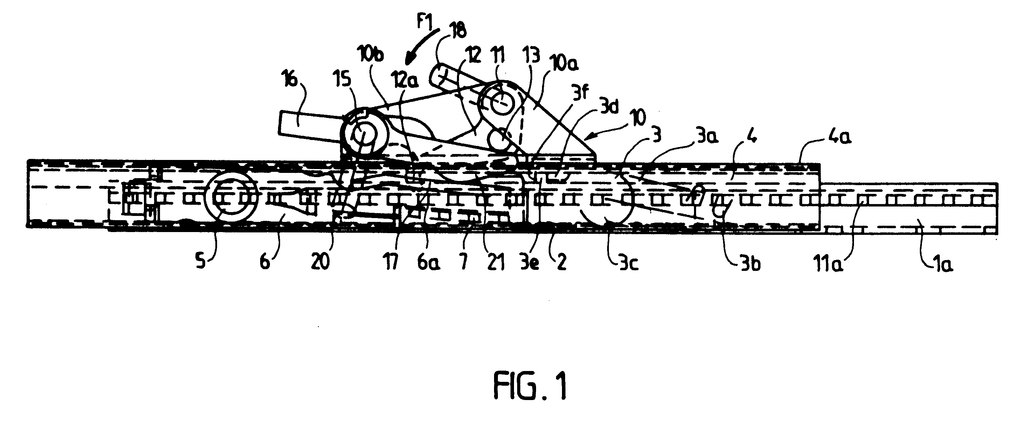

A la fig. 1, on a représenté schématiquement le profilé inférieur 1a d'une glissière, ce profilé étant fixé suivant les cas sur le dessus du plancher d'un véhicule soit à droite, soit à gauche du siège considéré devant être verrouillé et manoeuvré.

Le fond du profilé inférieur 1a présente une denture interne 2 qui est destinée à coopérer avec une mémoire 3 possèdant un becquet 3a et placée en partie à l'intérieur de la glissière et en partie sur la face interne de cette dernière. Cette mémoire 3 est constituée par un bras 3a terminé à sa partie arrière par un bec 3b et présentant dans sa zone médiane une partie circulaire 3c reposant à l'intérieur du profilé fixe 1a.

Pour faciliter la compréhension de la description, on a omis de représenter sur les dessins les billes et tiges de guidage du profilé supérieur mobile 4 par rapport au profilé inférieur fixe 1a. Comme cela est courant, il est prévu, sur l'un des côtés du profilé supérieur mobile 4 dans la zone avant de ce dernier, un axe 5 sur lequel est monté un verrou 6 présentant à sa partie arrière 6a un peigne 7 destiné à coopérer avec une denture portée par le côté correspondant du profilé inférieur fixe 1a de façon à rendre le profilé supérieur mobile 4 solidaire de ce dernier, par pénétration du peigne 7 dans la denture 11a du profilé fixe 1a. Ce montage est tout à fait classique de même que le ressort de maintien du verrou 6 en position de verrouillage dans la denture 11a du profilé fixe 1a.

La face supérieure 4a du profilé supérieur mobile 4 porte une équerre 10 dont l'aile verticale 10a est percée d'un trou dans lequel passe un axe 11 permettant la rotation d'un premier levier 12 en L terminé par un bec 12a. Le levier 12 porte sous l'axe 11 un doigt 13.

L'extrémité avant 10b de l'équerre 10 porte un axe 15 sur lequel est fixé un second levier 16 en L renversé terminé par un bec 17.

Le signe de référence 18 désigne la commande manuelle du premier levier 12 tandis que 20 désigne la commande manuelle du second levier 16. Finalement sur l'axe 15 est montée une biellette 21.

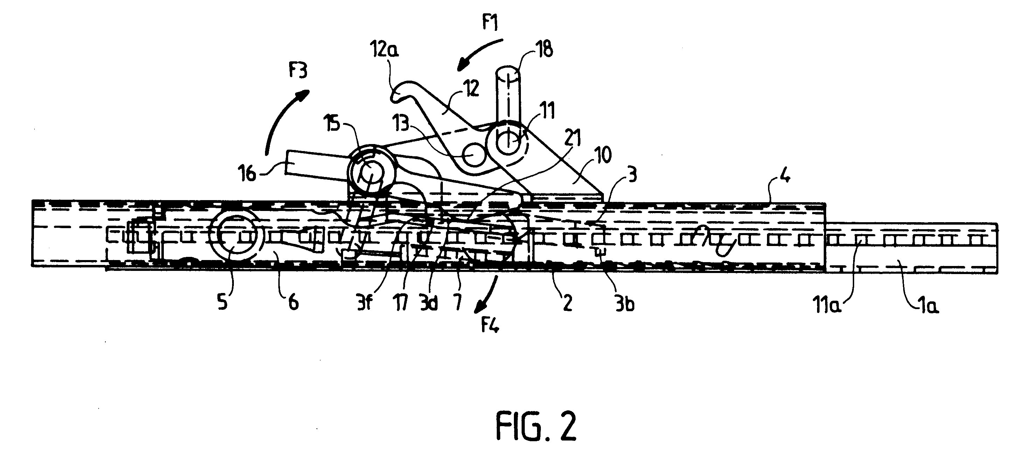

Lorsqu'on examine la fig. 2, on voit que la mémoire 3 est déverrouillée c'est-à-dire que son bec 3b n'est pas enclenché dans la denture 2 du profilé inférieur fixe 1a. Le mouvement dans le sens de la flèche F3 du second levier 16 par la commande manuelle 20 a entraîné le pivotement de l'axe 15, et le bec 17 a fait pivoter la mémoire 3 en libérant ainsi cette dernière. De plus, la biellette 21 en appuyant fortement sur le dessus du verrou 6 a abaissé celui-ci dans le sens de la flèche F4 en désengageant le peigne 7 de la denture porté par le profilé inférieur fixe 1a, le bec 17 du levier 16 étant entraîné par une encoche 3d de la mémoire 3 permettant I'entraînement d'avant en arrière de cette dernière.

Ainsi, dans la position de la fig. 2, la mémoire 3 et le verrou 6 sont libres, et l'on peut régler à volonté la position du siège considéré suivant la morphologie de la personne assise sur ce siège, que ce soit le conducteur ou le passager.

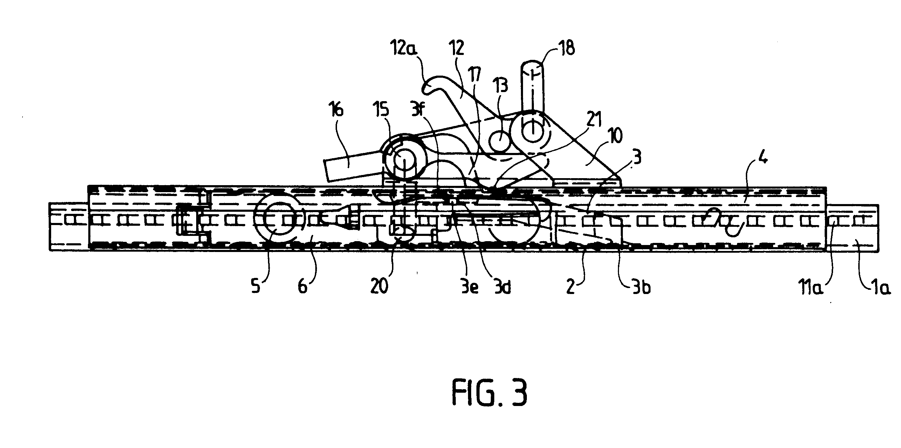

Lorsque la position choisie est obtenue, on relâche la commande 20 qui sous l'effet du ressort du verrou 6 ramène rapidement les organes dans la position représentée à la fig. 3. La mémoire 3 est verrouillée par le bec 3b dans la denture 2 du profilé inférieur fixe 1a, et le verrou 6 a repris sa position en verrouillant le profilé supérieur mobile 4 par rapport au profilé inférieur fixe 1a. Le levier 16 est soulevé, la biellette 21 est en position de repos. Le siège est alors verrouillé dans la position choisie.

Dans le cas où l'on désire simplement avancer le siège vers l'avant pour dégager un espace suffisant pour que les passagers des sièges arrière pénètrent ou sortent du véhicule, on utilise en général le pivotement du dossier du siège considéré, ce qui a pour effet d'entraîner la commande 18 du premier levier 12 dans le sens de la flèche F1 (voir fig. 1 et fig. 2). Le mouvement du levier 12 provoque (voir fig. 1), par l'intermédiaire du doigt 13 solidaire dudit levier 12, l'abaissement de la biellette 21 qui déverrouille le verrou 6 en faisant sortir le peigne 7 de la denture du profilé inférieur fixe 1a. Ainsi, le profilé supérieur 4 est libre par rapport au profilé inférieur 1a. On peut donc amener le siège vers l'avant soit sous le volant soit sous le tableau de bord.

Lorsque le ou les passagers de l'arrière du véhicule sont montés ou ont quitté ce dernier, il suffit de repousser le siège vers l'arrière jusqu'au moment où l'extrémité 12a du levier 12, en forme de bec, vient en contact avec la partie avant 3f de la zone 3e (voir fig. 2), le bec 12a passant sur le côté par un dégagement réalisé sur la zone 3e. Le siège retrouve ainsi la position choisie à l'origine. On relève alors le dossier et les organes contrôlés par la commande 18 du levier 12 reprennent la position représentée à la fig. 3.

## Revendications

1. Glissière à mémoire interne comprenant un verrou (6) articulé (en 5) sur le profilé supérieur mobile (4) qui présente un peigne destiné à coopérer avec une denture du profilé inférieur fixe (1a) en vue de son verrouillage et une mémoire (3) coopérant avec le profilé inférieur fixe (1a) de la glissière pour régler en position longitudinale un siège monté sur le profilé supérieur mobile (4) et permettant un déblocage du profilé supérieur mobile afin d'assurer un mouvement de celui-ci par rapport au profilé inférieur fixe, caractérisée en ce que la mémoire (3) comprend un bras (3a) présentant un bec arrière (3b) et une encoche avant (3d) et étant en repos dans la partie basse interne du profilé inférieur fixe (1a) qui présente une denture interne (2) destinée à coopérer avec ledit bec arrière (3b) de la mémoire (3), un premier levier (12) en L, terminé par un bec (12a), étant articulé par l'intermédiaire d'un premier axe d'articulation (11) sur une équerre (10) montée sur le profilé supérieur mobile (4), et présentant un doigt (13) en dessous de son axe d'articulation (11), cette équerre (10) portant un second axe d'articulation (15) pour, d'une part une biellette (21) et, d'autre part un second levier (16) en L qui est terminé par un bec (17) destiné à coopérer avec l'encoche (3d) de la mémoire (3), la biellette (21) étant prévue pour prendre appui sur le verrou sous l'effet du doigt (13) du premier levier (12) en L, un premier moyen de commande (20) faisant pivoter la biellette et le second levier (16) en L afin de permettre une libération respectivement du verrou (6) et de la mémoire (3) et un second moyen de commande (18) faisant pivoter la biellette afin de permettre la libération du verrou (6).

2. Glissière suivant la revendication 1, caractérisée en ce que le verrou comprend un ressort permettant, après relâche de la commande (20), de faciliter le verrouillage du profilé supérieur mobile (4) par rapport au profilé inférieur fixe (1a), le second levier (16) en L étant alors soulevé et la biellette (21) en position de repos.

3. Glissière suivant l'une des revendications 1 ou 2, caractérisée en ce que le pivotement du dossier du siège entraîne la commande (18) à faire pivoter le premier levier (12) en L dans la direction pour laquelle le doigt (13) appuie sur le levier (21) pour déverrouiller le verrou (6).

4. Glissière suivant l'une des revendications 1 à 3, caractérisée par le fait que le bec (12a) vient en contact avec l'extrémité avant (3f) de la zone (3e) de la mémoire (3).

5. Glissière suivant l'une des revendications 1 à 4, caractérisée en ce que la mémoire (3) est placée en partie à l'intérieur de la glissière et en partie sur la face interne de cette dernière.

## Claims

1. Inner memory slide comprising a latch (6) articulated (at 5) on the mobile upper profile member (4) which has a comb for cooperating with a toothing of the fixed lower profile member (1a) in order to latch the same and a memory means (3) cooperating with the fixed lower profile member (1a) of the slide for longitudinally adjusting a seat mounted on the mobile upper profile member (4) and enabling an unlatching of the mobile upper profile member so as to allow a movement of the same with respect to the fixed lower profile member, characterized in that the memory means (3) comprises an arm (3a) with a rear nose (3b) and a front notch (3d) and being at rest in the inner lower portion of the fixed lower profile member (1a) which has an inner toothing (2) for cooperating with said rear nose (3b) of the memory means (3), a first L-shaped lever (12), which ends in a nose (12a), being articulated via a first articulation pin (11) on an angle bracket (10) mounted on the mobile upper profile member (4), and having a finger (13) below its articulation pin (11), this angle bracket (10) carrying a second articulation pin (15) for, on the one hand, an actuating bar (21) and, on the other hand, a second L-shaped lever (16) which ends in a nose (17) for cooperating with the notch (3d) of the memory means (3), the actuating bar (21) being provided to bear on the latch under effect of the finger (13) of the first L-shaped lever (12), a first control means (20) making the actuating bar and the second L-shaped (16) to pivot in order allow a release respectively of the latch (6) and of the memory means (3), and a second control (18) means making the actuating bar to pivot so as to allow the release of the latch (6).

2. Slide according to claim 1, characterized in that the latch comprises a spring enabling, after release of the control device (20), to facilitate the latching of the mobile upper profile member (4) with respect to the fixed lower profile member (1a), the second L-shaped lever (16) being then raised and the actuating bar (21) in its rest position.

3. Slide according to one of claims 1 or 2, characterized in that the pivoting of the back portion of the seat drives the control device (18) to cause the first L-shaped lever (12) to pivot in the direction for which the finger (13) bears on the lever (21) for unlatching the latch (6).

4. Slide according to one of claims 1 to 3, characterized by the fact that the nose (12a) comes into engagment with the front end portion (3f) of the zone (3e) of the memory means (3).

5. Slide according to one of claims 1 to 4, characterized in that the memory means (3) is positioned in part inside the slide and in part on the inner face of the same.

## Patentansprüche

1. Gleitführung mit innerer Speicherung mit einem an der oberen beweglichen Schiene (4) schwenkbar (bei 5) gelagerten Riegel (6), der mit einem Kamm versehen ist, der für ein Zusammenarbeiten mit einer Verzahnung der unteren festen Schiene (1a) zur Verriegelung bestimmt ist, und mit einer Speichereinrichtung (3), die mit der unteren festen Schiene (1a) der Gleitführung zusammenarbeitet, um einen auf der oberen beweglichen Schiene (4) montierten Sitz in Längsrichtung einzustellen, und eine Entriegelung der oberen beweglichen Schiene erlaubt, um deren Bewegung gegenüber der unteren festen Schiene zu gewährleisten, gekennzeichnet durch eine Speichereinrichtung (3) mit einem Arm (3a) mit einem hinteren Schnabel (3b) und einer vorderen Einkerbung (3d), der sich in einer Ruhestellung im unteren inneren Bereich der unteren festen Schiene (1a) befindet, die eine innere Verzahnung (2) zum Zusammenwirken mit dem hinteren Schnabel (3b) der Speichereinrichtung (3) aufweist, einen ersten L-förmigen Hebel (12), der in einem Schnabel (12a) endet, mittels einer ersten Anlenkachse (11) auf einem Winkelstück (10) angelenkt ist, das auf der oberen beweglichen Schiene (4) montiert ist und einen Finger (13) unterhalb seiner Anlenkachse (11) aufweist, wobei dieses Winkelstück (10) eine zweite Anlenkachse (15) einerseits für einen Schwenkarm (21) und andererseits für einen zweiten L-förmigen Hebel (16) aufweist, der in einem Schnabel (17) endet, der zum Zusammenwirken mit der Einkerbung (3d) der Speichereinrichtung (3) vorgesehen ist, und der Schwingarm (21) dafür vorgesehen ist, sich unter der Einwirkung des Fingers (13) des ersten L-förmigen Hebels (12) auf dem Riegel abzustützen, ein erstes Steuermittel (20) zum Verschwenken des Schwingarms und des zweiten L-förmigen Hebels (16), um eine Freigabe zwischen dem Riegel (6) und der Speichereinrichtung (3) zu ermöglichen, und ein zweites Steuermittel (18) zum Verschwenken des Schwingarms, um die Freigabe des Riegels (6) zu ermöglichen.

2. Gleitführung nach Anspruch 1, **dadurch gekennzeichnet**, daß dem Riegel eine Feder zugeordnet ist, die nach dem Freigeben der Steuerung (20) die Verriegelung der oberen beweglichen Schiene (4) gegenüber der unteren festen Schiene (1a) erleichtert, wobei der zweite L-förmige Hebel (16) entsprechend angehoben wird und der Schwingarm (21) in die Ruhestellung übergeht.

3. Gleitführung nach Anspruch 1 oder 2, **dadurch gekennzeichnet**, daß die Schwenkung der Rückenlehne des Sitzes die Steuerung (18) betätigt, um den ersten L-förmigen Hebel (12) in die Richtung zu verschwenken, bei der sich der Finger (13) auf dem Hebel (21) abstützt, um den Riegel (6) zu entriegeln.

4. Gleitführung nach einem der Ansprüche 1 bis 3, **dadurch gekennzeichnet**, daß der Schnabel (12a) mit dem vorderen Ende (3f) der Zone (3e) der Speichereinrichtung (3) in Kontakt kommt.

5. Gleitführung nach einem der Ansprüche 1 bis 4, **dadurch gekennzeichnet**, daß die Speichereinrichtung (3) zum Teil im Inneren der Gleitführung und zum Teil auf der inneren Fläche dieser letzteren angeordnet ist.
